# EUROPÄISCHE PATENTANMELDUNG

(11) **EP 2 447 169 A2**
(43) Veröffentlichungstag der Anmeldung: **02.05.2012**
(21) Anmeldenummer: 11008379.7
(22) Anmeldetag: 18.10.2011
(51) Int. Cl.: B65B 7/16, B65B 35/24, B65B 35/30, B65G 17/00, B65G 25/00

(54) **Schalenverschließmaschine und Verfahren zum Betrieb einer solchen Schalenverschließmaschine**

(30) Priorität: 26.10.2010 DE 102010049588
(71) Anmelder: Multivac Sepp Haggenmüller GmbH & Co. KG, 87787 Wolfertschwenden (DE)
(72) Erfinder: Ehrmann, Elmar, 87730 Bad Grönenbach (DE); Jokele, Bernd, 87435 Kempten (DE); Slomp, Tieme, Jan, 87730 Bad Grönenbach (DE); Scheibel, Stefan, 87700 Memmingen (DE)
(74) Vertreter: Grünecker, Kinkeldey, Stockmair & Schwanhäusser

(57) **Zusammenfassung**

Die Erfindung bezieht sich auf eine Schalenverschließmaschine (1, 1') mit einem Schalen-Transportmittel (5, 5'), wobei das Transportmittel (5,5') Schalenaufnahmen (8) aufweist, die jeweils zur Aufnahme einer Schale (3) ausgebildet sind. Die Erfindung zeichnet sich dadurch aus, dass die Schalenverschließmaschine (1,1') an einer Einlegestation (9) einen Einlegeroboter (12) zum Einlegen von einem Produkt befüllten Schalen (3) in Schalenaufnahmen (8) und an einer Entnahmestation (11) einen Entnahmeroboter (24) zum Entnehmen von mittels der Schalenverschließmaschine (1, 1') verschlossenen Schalen (3) aus Schalenaufnahmen (8) aufweist. Die Erfindung bezieht sich auch auf ein entsprechendes Verfahren zum Betrieb einer in intermittierenden Arbeitstakten betreibbaren Schalenverschließmaschine (1, 1').

## Beschreibung

Die Erfindung bezieht sich auf eine Schalenverschließmaschine gemäß dem Oberbegriff des Anspruchs 1, sowie auf ein Verfahren zum Betrieb einer in intermittierenden Arbeitstakten betreibbaren Schalenverschließmaschine zum Verschließen von Schalen.

Solche Schalenverschließmaschinen sind in der Verpackungsindustrie weit verbreitet. Sie werden in Fachkreisen auch als "Traysealer" bezeichnet. Der am weitesten verbreitete Typ solcher Schalenverschließmaschinen verfügt über ein oder mehrere Transportbänder, auf die die Schalen aufgelegt und auf denen die Schalen in eine Verschließstation und aus der Verschließstation heraus transportiert werden. In einem zweiten, gattungsgemäßen und weniger verbreiten Typ von Schalenverschließmaschinen verfügen die Maschinen über ein Schalen-Transportmittel mit Schalenaufnahmen. Eine solche, gattungsgemäße Schalenverschließmaschine ist in der EP 1 038 773 B1 offenbart.

Aufgabe der vorliegenden Erfindung ist es, eine Schalenverschließmaschine und ein Verfahren zu deren Betrieb zur Verfügung zu stellen, die hinsichtlich flexiblerer Einsatzmöglichkeiten verbessert sind.

Diese Aufgabe wird gelöst durch eine Schalenverschließmaschine mit den Merkmalen des Anspruchs 1 bzw. durch ein Verfahren mit den Merkmalen des Anspruchs 8. Vorteilhafte Weiterbildungen der Erfindung sind in den Unteransprüchen angegeben.

Die erfindungsgemäße Schalenverschließmaschine zeichnet sich dadurch aus, dass an einer Einlegestation ein Einlegeroboter zum Einlegen von mit einem Produkt befüllten Schalen in Schalenaufnahmen und an einer Entnahmestation ein Entnahmeroboter zum Entnehmen der verschlossenen Schalen vorgesehen sind. Die Roboter sorgen dafür, dass die Schalenverschließmaschine mit den Schalen sehr schnell beschickt werden kann, und dass die verschlossenen Schalen sehr schnell wieder von der Schalenverschließmaschine entnommen werden können. Die Geschwindigkeit, mit der die beiden Roboter die Schalen in die Schalenaufnahmen einsetzen oder aus den Schalenaufnahmen entnehmen können, ist weitaus höher als bei einer manuellen Ausführung dieser Prozesse.

Die Lade- und Entnahmegeschwindigkeit wird erfindungsgemäß weiter dadurch gesteigert, dass die Schalenaufnahmen auf dem Schalen-Transportmittel definierte Positionen für die Schale festlegen. Die beiden Roboter müssen daher nicht mehr erkennen, wo eine Schale eingelegt oder entnommen werden soll, sondern sie können direkt auf die vorbekannte Position der Schalenaufnahmen abgestimmt sein. Damit entfallen aufwendige Rechnungsschritte, sodass die Roboter ihre Prozesse schneller ausführen können. Dies wiederum führt dazu, dass die Einlegestation und die Entnahmestation sehr kurz gebaut werden können, sodass auch die Schalenverschließmaschine insgesamt sehr kompakt werden kann. Ein Förderer, mit dem befüllten Schalen bereit gestellt werden, kann unter jedem beliebigen Winkel - auch rechtwinklig - an die Einlegestation geführt werden.

Die Schalenverschließmaschine ist üblicherweise intermittierend betreibbar, d.h. in aufeinanderfolgenden Arbeitstakten. In jedem Arbeitstakt werden die Schalen um eine bestimmte Transportdistanz weiter transportiert. In einer vorteilhaften Variante der Erfindung beträgt die Distanz der Entnahmestation von der Einlegestation das zweifache bis fünffache dieser Transportdistanz, vorzugsweise nur das zwei- oder dreifache der Transportdistanz. Auf diese Weise wird die Schalenverschließmaschine extrem kurz. In einem ersten Arbeitstakt können die Schalen in die Schalenaufnahmen eingelegt werden, in einem nachfolgenden Arbeitstakt können sie in einer Verschließstation verschlossen werden und in einem weiteren Arbeitstakt können die Schalen mittels des Entnahmeroboters entnommen werden. Da in (nahezu) jedem Arbeitstakt ein Arbeitsschritt an den Schalen vollzogen wird, kann die Schalenverschließmaschine kaum noch kürzer gebaut werden. Diese kompakte Bauweise der erfindungsgemäßen Schalenverschließmaschine erlaubt ihren Einsatz auch in engen Räumlichkeiten.

Vorzugsweise ist das Schalen-Transportmittel ein endloses Transportmittel, da dies einen reibungslosen Betrieb der Schalenverschließmaschine begünstigt. Beispielsweise könnte das Schalen-Transportmittel eine Mehrzahl von Querstäben umfassen, die sich quer zur Transportrichtung zwischen zwei endlosen Transportketten erstrecken. Zwischen bestimmten Querstäben könnte jeweils eine Schalenaufnahme gebildet sein.

In einer anderen Variante handelt es sich bei dem Schalen-Transportmittel um eine Plattenkette, die mehrere Platten sowie zwischen den Platten gebildete Schalenaufnahmen aufweist. Die Plattenkette hat den Vorteil, dass sie sehr stabil ist. Darüber hinaus sorgen die Platten für einen Abstand benachbarter Schalen in Transportrichtung.

Das Schalen-Transportmittel könnte ein Rahmenelement aufweisen, das seinerseits eine oder mehrere Schalenaufnahmen umfasst. Wenn ein solches Rahmenelement an einer Plattenkette vorgesehen ist, könnte es zwischen zwei Platten angeordnet sein und seinerseits die Schalenaufnahmen und deren Form definieren. Das Rahmenelement könnte jedoch auch unabhängig von einem endlosen Transportmittel vorgesehen sein, beispielsweise in Form eines festen, horizontalen Rahmenelements, das eine oder mehrere Schalenaufnahmen definiert.

Vor allem bei letzterer Ausführung wäre es denkbar, das eine horizontale Rückführung zum Rückführen eines Rahmenelements von der Entnahmestation zu der Einlegestation vorgesehen ist. In dieser Variante könnten mehrere Rahmenelemente vorgesehen sein, beispielsweise drei, vier oder fünf, die in horizontaler Richtung von der Einlegestation zur Entnahmestation und mittels der Rückführung von der Entnahmestation zurück zur Einlegstation transportiert werden.

Zweckmäßig ist es, wenn der Einlegeroboter und/oder der Entnahmeroboter jeweils zum Transportieren einer Mehrzahl von Schalen ausgebildet ist. Auf diese Weise kann das Beschicken und Entladen der Schalenverschließmaschine beschleunigt werden.

Die Erfindung bezieht sich auch auf ein Verfahren zum Betrieb einer in intermittierenden Arbeitstakten betreibbaren Schalenverschließmaschine zum Verschließen von Schalen. Dabei werden an einer Einlegestation mittels eines Einlegeroboters zu verschließende Schalen in Schalen-Aufnahmen eines Schalen-Transportmittels eingesetzt. Um die Verweildauer der Schalen in der Schalenverschließmaschine zu verkürzen, sind die Schalen bereits vor ihrem Einsetzten in die Schalenaufnahmen mit einem Produkt befüllt worden. Ein Entnahmeroboter entnimmt die Schalen wieder an einer Entnahmestation.

In einer vorteilhaften Variante des Verfahrens werden die Schalen in maximal vier Arbeitstakten der Schalenverschließmaschine von der Einlegestation zur Entnahmestation transportiert, vorzugsweise sogar in nur zwei oder drei Arbeitstakten. Auf diese Weise wird zum Einen die Verweildauer der Produkte in der Schalenverschließmaschine sehr kurz, was beispielsweise bei gekühlten Produkten einen Temperaturanstieg verhindern und damit vorteilhaft sein kann. Zum Anderen wird die Schalenverschließmaschine auf diese Weise sehr kompakt.

Denkbar wäre es, dass die Schalen in einer Verschließstation zwischen der Einlegestation und der Entnahmestation evakuiert, mit einem Austauschgas oder Austauschgasgemisch begast, mit einer Oberfolie verschlossen und/oder versiegelt werden. Obwohl sich die Schalen nur wenige Arbeitstakte in der Schalenverschließmaschine aufhalten, können dennoch viele Arbeitsschritte an ihnen vollzogen werden.

Im Folgenden werden vorteilhafte Ausführungsbeispiele der erfindungsgemäßen Schalenverschließmaschine und des erfindungsgemäßen Verfahrens anhand einer Zeichnung näher erläutert. Im Einzelnen zeigen:
- Figur 1: eine schematische Ansicht eines ersten Ausführungsbeispiels einer erfindungsgemäßen Schalenverschließmaschine und
- Figuren 2-7: verschiedene Arbeitsschritte beim Betrieb eines zweiten Ausführungsbeispiels einer Schalenverschließmaschine.

Einander entsprechende Komponenten sind in den Figuren durchgängig mit gleichem Bezugszeichen versehen.

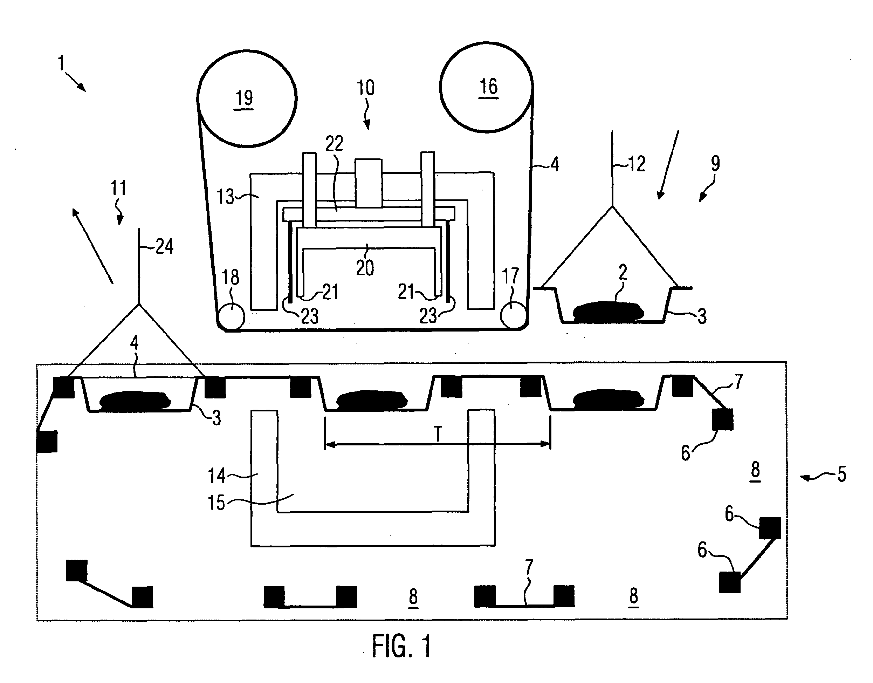

Figur 1 zeigt in schematischer Darstellung ein erstes Ausführungsbeispiel einer erfindungsgemäßen Schalenverschließmaschine 1. In der Schalenverschließmaschine 1 können mit einem Produkt 2 befüllte Schalen 3 mittels einer Oberfolie 4 verschlossen werden.

Die Schalenverschließmaschine 1 verfügt über ein Schalen-Transportmittel 5, mittels dessen die Schalen 3 in der Schalenverschließmaschine 1 transportiert werden. Im vorliegenden Ausführungsbeispiel handelt es sich bei dem Schalen-Transportmittel 5 um ein endlos umlaufendes Transportmittel, speziell um eine Plattenkette. Diese Plattenkette 5 weist mehrere Kettenglieder 6 auf. Immer abwechselnd sind zwischen zwei benachbarten Kettengliedern 6 entweder eine starre Platte 7 oder eine Schalenaufnahme 8 vorgesehen. Dabei müssen die Kettenglieder 6 nicht äquidistant in der Plattenkette 5 verteilt sein. Denkbar wäre es beispielsweise, dass zwei durch eine Platte 7 verbundene Kettenglieder 6 einen kürzeren Abstand voneinander haben als zwei benachbarte Kettenglieder 6, zwischen denen sich eine Schalenaufnahme 8 befindet.

Die Schalenverschließmaschine 1 verfügt ferner über eine Einlegestation 9, eine Verschließstation 10 mit ggf. integrierter Schneidstation für die Oberfolie 4 und eine Entnahmestation 11. An der Einlegestation 9 ist ein Einlegeroboter 12 vorgesehen. Er verfügt über ein Greifwerkzeug, mittels dessen er gleichzeitig eine oder mehrer Schalen 3 erfassen kann, die beispielsweise auf einem Förderband oder auf einer Förderfläche (nicht gezeigt) bereitgestellt werden. Mittels einer geeigneten Steuerung ist der Einlegeroboter 12 dazu programmiert, die Schalen 3 an der Einlegestation 9 in die Schalenaufnahmen 8 des Schalen-Transportmittels 5 einzulegen.

Die Verschließstation 11 verfügt über ein Oberwerkzeug 13 und ein Unterwerkzeug 14, die relativ zueinander bewegbar sind, sodass sie sich insbesondere gasdicht um eine oder mehrere Schalen 3 schließen können. Eine zwischen dem Oberwerkzeug 13 und dem Unterwerkzeug 14 gebildete Kammer 15 ist evakuierbar und/oder mit einem Austauschgas oder Austauschgasgemisch befüllbar. Die Abmessung der Ober- und Unterwerkzeuge 13, 14 ist so gewählt, dass die Außenwände der beiden Werkzeugteile 13, 14 jeweils im Bereich einer Platte 7 der Plattenkette 5 aufeinander treffen.

Bei der Oberfolie 4 handelt es sich um eine siegelbare Kunststofffolie. Sie wird von einer Folienrolle 16 abgezogen und mittels einer Umlenkrolle 17 so umgelenkt, dass sie in Wesentlichen horizontal zwischen Oberwerkzeug 13 und Unterwerkzeug 14 hindurch läuft. Die erste Umlenkrolle 17 ist unmittelbar außerhalb des Oberwerkzeugs 13 angeordnet, insbesondere zwischen der Einlegestation 9 und der Verschließstation 10.

Eine zweite Umlenkrolle 18 auf der Ausgangsseite der Verschließstation 10 lenkt das nach dem Verschließen der Schalen 3 verbleibende Restfoliengitter der Oberfolie 4 zu einem Restfolienaufwickler 19. Auch die zweite Umlenkrolle 18 ist unmittelbar außerhalb der Werkzeuge 13, 14 der Verschließstation 10 angeordnet, um das Restfoliengitter 4 so bald wie möglich nach der Verschließstation 10 von den verschlossenen Schalen 3 zu entfernen.

In dem Oberwerkzeug 13 der Verschließstation 10 ist ein beheizbares Siegelwerkzeug 20 vorgesehen. Durch die Übertragung von Wärme und gegebenenfalls die gleichzeitige Ausübung eines Siegeldrucks können Siegelränder 21 des Siegelwerkzeugs 20 die Oberfolie 4 mit den Schalen 3 versiegeln. Das Siegelwerkzeug 20 kann relativ zum Oberwerkzeug 13 bewegbar sein, um nach dem Schließen der Ober- und Unterwerkzeuge 13, 14 zunächst ein Evakuieren der Schalen 13 und/oder ein Begasen der Schalen 13 zu erlauben, bevor die Schalen 3 anschließend verschlossen und versiegelt werden.

Im Oberwerkzeug 3 ist ferner ein Schneidwerkzeug 22 vorgesehen. Es ist relativ zum Oberwerkzeug 13 und zum Siegelwerkzeug 20 bewegbar und verfügt über Schneidmesser oder Schneidkanten 23, die die Oberfolie 4 im Bereich der Ränder der Schalen 3 durchtrennen und die Verpackungen auf diese Weise vereinzeln können.

An der Entnahmestation 11 ist ein Entnahmeroboter 24 vorgesehen, der in seinem Aufbau dem Einlegeroboter 12 entsprechen kann. Beispielsweise kann es sich um einen Scara-oder um einen Delta-Roboter handeln. Der Entnahmeroboter 24 dient dazu, die mit der Oberfolie 4 verschlossenen Schalen 3 aus der Schalenverschließmaschine 1 zu entnehmen.

Der Betrieb der Schalenverschließmaschine 1 bzw. das erfindungsgemäße Verfahren laufen wie folgt ab.

Auf einer Förderfläche oder einem Förderband werden bereits mit einem Produkt 2 befüllte Schalen 3 bereitgestellt. Der Einlegeroboter 12 ergreift mittels eines Greifwerkzeuges eine oder mehrere der Schalen 3, bewegt die Schale (oder die Schalen) 3 während des Stillstandes des Schalen-Transportmittels 5 zu Schalenaufnahmen 8 und legt jeweils eine Schale 3 in eine Schalenaufnahme 8. Während des Stillstands des Schalen-Transportmittels 5 können auf diese Weise entweder eine oder gleichzeitig oder sequenziell auch mehrere Schalen 3 in Schalenaufnahmen 8 des Schalen-Transportmittels 5 eingelegt werden. In einem Transportintervall des Arbeitstaktes der Schalenverschließmaschine 1 wird das Schalen-Transportmittel 5 anschließend um eine Transportdistanz T vorwärts bewegt. Die an der Einlegestation 9 in die Schalenaufnahmen 8 eingelegten Schalen 3 gelangen auf diese Weise zur Verschließstation 10.

In der Verschließstation 10 werden Ober- und Unterwerkzeug 13, 14 um die Schalen 3 geschlossen, um eine gasdicht geschlossene Kammer 15 zu bilden. Diese wird evakuiert und ggf. mit einem Austauschgas oder Austauschgasgemisch begast. Unmittelbar im Anschluss an das Evakuieren und/oder Begasen senkt sich das Siegelwerkzeug 20 auf die Oberfolie 4, um diese mit einem Siegeldruck an die Ränder der Schalen 3 anzudrücken. Gleichzeitig wird Wärme vom Siegelwerkzeug 20 auf die Oberfolie 4 übertragen, um diese an die Schalen 3 anzusiegeln. Anschließend senkt sich das Schneidwerkzeug 22, um die Oberfolie 4 mittels der Schneidkanten 23 zu durchtrennen.

Sobald sich Ober- und Unterwerkzeug 13, 14 wieder geöffnet haben, wird das Restfoliengitter der Oberfolie 4 weiter zum Restfolienaufwickler 19 transportiert. Gleichzeitig wird das Schalen-Transportmittel 5 angetrieben, um die Schalen 3 abermals um eine Transportdistanz T zu bewegen. Auf diese Weise gelangen die Schalen 3 zur Entnahmestation 11, wo sie mittels des Entnahmeroboters 24 entnommen werden.

Bei dem in Figur 1 dargestellten Ausführungsbeispiel beträgt die Distanz der Entnahmestation 11 von der Einlegestation 9 lediglich das Doppelte der Transportdistanz T eines einzigen Arbeitstaktes der Verpackungsmaschine 1. Im Obertrum des Schalen-Transportmittels 5 sind daher zu jedem Zeitpunkt nur drei Schalenaufnahmen 8 hintereinander angeordnet. Damit ergibt sich eine in Transportrichtung äußerst kompakt bauende Schalenverschließmaschine 1. Ein weiterer Vorteil liegt daran, dass die als Schalen-Transportmittel 5 eingesetzte Plattenkette äußerst kurz wird. Im Ausführungsbeispiel nach Figur 1 hat sie entlang ihrer Längsrichtung lediglich acht Schalenaufnahmen 8 bzw. acht Platten 7. Da sie sehr kurz ist, kann die Plattenkette 5 vergleichsweise einfach entnommnen und z. B. für einen Formatwechsel der Schalen 3 ausgetauscht werden.

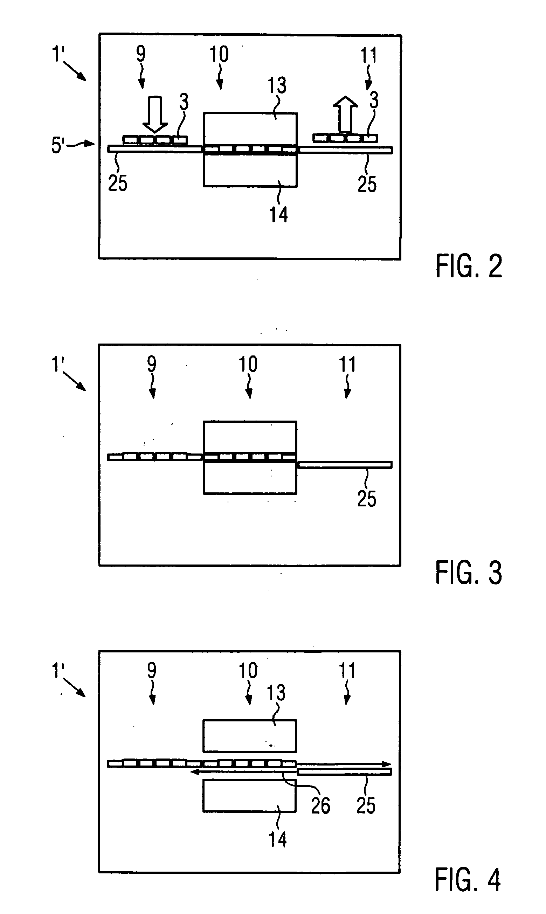

In den Figuren 2 bis 7 ist ein zweites Ausführungsbeispiel 1 einer erfindungsgemäßen Schalenverschließmaschine 1' in unterschiedlichen Betriebszuständen dargestellt. Der Übersichtlichkeit halber sind dabei nur die wesentlichen Komponenten dieser Schalenverschließmaschine 1' in schematischer Form gezeigt. Im Unterschied zum ersten Ausführungsbeispiel verfügt die Schalenverschließmaschine 1' nicht über ein endlos umlaufendes Schalen-Transportmittel 5. Statt dessen ist als Schalen-Transportmittel 5' eine Gruppe von (im Ausführungsbeispiel: drei) Rahmenelementen 25 vorgesehen. Jedes Rahmenelement 25 verfügt über eine Mehrzahl von Schalenaufnahmen 8, in die Schalen 3 eingesetzt werden können. Die Rahmenelemente 25 des Schalen-Transportmittels 5' können in horizontaler Richtung durch die Schalenverschließmaschine 1' transportiert werden.

Figur 2 zeigt einen Zustand der Schalenverschließmaschine 1', bei dem mittels eines Einlegeroboters (nicht gezeigt) an einer Einlegestation 9 eine Gruppe von vier Schalen 3 in ein Rahmenelement 25 eingesetzt werden. Ein zweites Rahmenelement 25, in dem ebenfalls eine Gruppe von vier Schalen 3 aufgenommen ist, befindet sich zum gleichen Zeitpunkt zwischen den geschlossenen Werkzeugen 13, 14 der Verschließstation 10, um dort mit einer Oberfolie 4 verschlossen zu werden. An einer Entnahmestation 11 entnimmt ein Entnahmeroboter (nicht gezeigt) verschlossene Schalen 3 aus einem dritten Rahmenelement 25. In Figur 2 befinden sich alle drei Rahmenelemente 25 in derselben Förderebene, in der sie von links nach rechts durch die Schalenverschließmaschine 1' transportiert werden.

Figur 3 zeigt die Schalenverschließmaschine 1' zu einem etwas späteren Zeitpunkt. Die erste Gruppe von Schalen 3 ist an der Einlegestation 9 in die Schalenaufnahmen 8 des Rahmenelements 25 eingesetzt worden. Die zweite Gruppe von Schalen 3 befindet sich immer noch in der Verschließstation, während die dritte Gruppe von Schalen 3 mittlerweile die Entnahmestation 11 verlassen hat. Außerdem ist das Rahmenelement 25 an der Entnahmestation 11 von der Förderebene in eine darunterliegende Rückführebene abgesenkt worden.

In Figur 4 haben sich Ober- und Unterwerkzeug 13, 14 voneinander entfernt, um so die Verschließstation 10 zu öffnen. Pfeile deuten an, dass das Rahmenelement 25 aus der Verschließstation 10 nun in der Förderebene nach rechts zur Entnahmestation 11 transportiert werden kann. Gleichzeitig kann das noch in der Entnahmestation 11 befindliche Rahmenelement 25 in der darunter liegenden Rückführebene entlang einer horizontalen Rückführung 26, z. B. einer Schiene, zur Einlegestation 9 zurückgeführt werden.

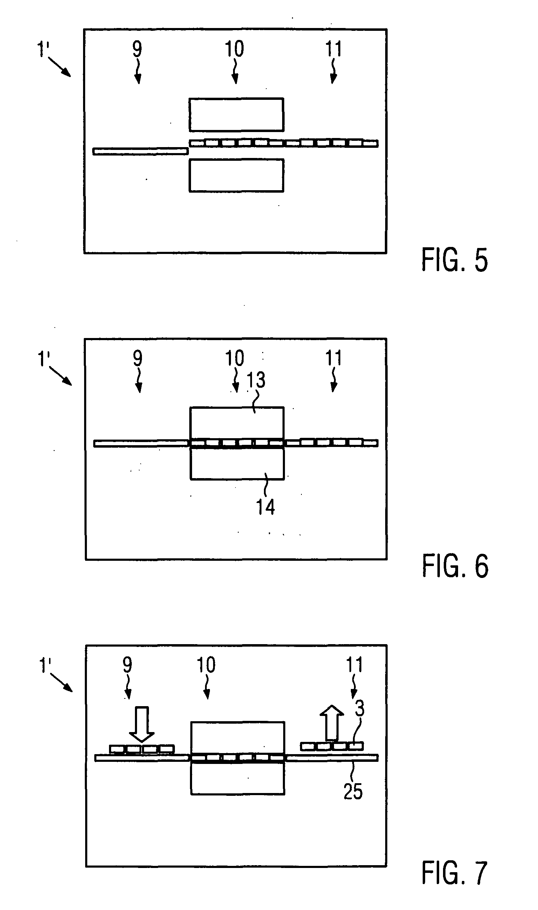

Figur 5 zeigt den Zustand, in dem das dritte Rahmenelement 25 wieder in der Einlegestation 9 angekommen ist. Die beiden anderen Rahmenelemente 25, die sich weiterhin in der Förderebene befinden, sind jeweils um eine Rahmenlänge nach rechts versetzt worden.

In Figur 6 haben sich Oberwerkzeug 13 und Unterwerkzeug 14 um die zwischen ihnen befindliche Gruppe von Schalen 3 geschlossen. Das Rahmenelement 25 an der Einlegestation 9 ist von der Rückführebene in die Förderebene angehoben worden, sodass es sich nun in der selben Ebene wie die anderen beiden Rahmenelemente 25 befindet.

In Figur 7 werden an der Einlegestation 9 neue Schalen 3 in das dort befindliche Rahmenelement 25 eingesetzt, während in der Verschließstation 10 Schalen 3 verschlossen und an der Entnahmestation 11 Schalen aus dem dort befindlichen Rahmenelement 25 entnommen werden. Der Zustand in Figur 7 entspricht wieder dem Zustand in Figur 2, sodass sich ein Arbeitszyklus geschlossen hat.

Die beiden dargestellten Ausführungsbeispiele von Schalenverschließmaschinen 1, 1' entsprechen sich insbesondere darin, dass sowohl an einer Einlegstation 9, als auch an einer Entnahmestation 11 jeweils ein Roboter 12, 24 vorgesehen ist, um befüllte Schalen 3 in Schalenaufnahmen 8 einzulegen bzw. um verschlossene Schalen 3 aus den Schalenaufnahmen 8 zu entnehmen. Darüber hinaus gleichen sich die Ausführungsbeispiele der Schalenverschließmaschinen 1, 1' darin, dass die Schalen 3 jeweils nur drei Arbeitstakte in der Schalenverschließmaschine 1, 1' verbringen, nämlich einen ersten Arbeitstakt zum Einlegen, einen zweiten Arbeitstakt zum Verschließen und einen dritten Arbeitstakt zum Entnehmen der Schalen 3.

Ausgehend von den dargestellten Ausführungsbeispielen können die erfindungsgemäße Schalenverschließmaschine 1, 1' und das erfindungsgemäße Verfahren in vielfacher Hinsicht abgewandelt werden. Beispielsweise wäre es denkbar, dass die Schalen 3 auch etwas mehr Arbeitstakte in der Schalenverschließmaschine 1 verbringen, um beispielsweise noch weitere Arbeitsgänge wie ein Etikettieren an den Schalen 3 auszuführen. In diesem Fall könnte eine Etikettierstation zwischen der Verschließstation 10 und der Entnahmestation 11 vorgesehen sein.

## Patentansprüche

1. Schalenverschließmaschine (1,1') mit einem Schalen-Transportmittel (5,5'), wobei das Transportmittel (5,5') Schalenaufnahmen (8) aufweist, die jeweils zur Aufnahme einer Schale (3) ausgebildet sind,
**dadurch gekennzeichnet, dass** die Schalenverschließmaschine (1,1') an einer Einlegestation (9) einen Einlegeroboter (12) zum Einlegen von mit einem Produkt (2) befüllten Schalen (3) in Schalenaufnahmen (8) und an einer Entnahmestation (11) einen Entnahmeroboter (24) zum Entnehmen von mittels der Schalenverschließmaschine (1,1') verschlossenen Schalen (3) aus Schalenaufnahmen (8) aufweist.

2. Schalenverschließmaschine nach Anspruch 1, **dadurch gekennzeichnet, dass** die Distanz der Entnahmestation (11) von der Einlegestation (9) das Zweifache bis Fünffache der Transportdistanz (T) beträgt, über die die Schalen (3) innerhalb eines Arbeitstaktes der Schalenverschließmaschine (1,1') transportierbar sind, vorzugsweise das Zwei- oder Dreifache der Transportdistanz (T).

3. Schalenverschließmaschine nach einem der vorangehenden Ansprüche, **dadurch gekennzeichnet, dass** das Schalen-Transportmittel (5) ein endloses Transportmittel (5) ist.

4. Schalenverschließmaschine nach einem der vorangehenden Ansprüche, **dadurch gekennzeichnet, dass** das Schalen-Transportmittel (5) eine Plattenkette ist, die Platten (7) und zwischen den Platten (7) gebildete Schalenaufnahmen (8) aufweist.

5. Schalenverschließmaschine nach einem der vorangehenden Ansprüche, **dadurch gekennzeichnet, dass** das Schalen-Transportmittel (5,5') mindestens ein Rahmenelement (25) mit einer oder mehreren Schalenaufnahmen (8) aufweist.

6. Schalenverschließmaschine nach Anspruch 5, **dadurch gekennzeichnet, dass** eine horizontale Rückführung (26) zum Rückführen eines Rahmenelements (25) von der Entnahmestation (11) zu der Einlegestation (9) vorgesehen ist.

7. Schalenverschließmaschine nach einem der vorangehenden Ansprüche, **dadurch gekennzeichnet, dass** der Einlegeroboter (12) und/oder der Entnahmeroboter (24) jeweils zum Transportieren einer Mehrzahl von Schalen (3) ausgebildet ist.

8. Verfahren zum Betrieb einer in intermittierenden Arbeitstakten betreibbaren Scha-Ienverschließmaschine (1,1') zum Verschließen von Schalen (3), **dadurch gekennzeichnet, dass** mit einem Produkt (2) befüllte Schalen (3) an einer Einlegestation (9) mittels eines Einlegeroboters (12) in Schalenaufnahmen (8) eines Schalen-Transportmittels (5,5') eingelegt werden, und dass die Schalen (3) an einer Entnahmestation (11) mittels eines Entnahmeroboters (24) aus den Schalenaufnahmen (8) entnommen werden, nachdem die Schalen (3) zuvor verschlossen wurden.

9. Verfahren nach Anspruch 8, **dadurch gekennzeichnet, dass** die Schalen (3) in maximal vier Arbeitstakten der Schalenverschließmaschine (1,1') von der Einlegestation (9) zur Entnahmestation (11) transportiert werden, vorzugsweise in nur zwei oder drei Arbeitstakten.

10. Verfahren nach einem der Ansprüche 8 oder 9, **dadurch gekennzeichnet, dass** die Schalen (3) in einer Verschließstation (10) zwischen der Einlegestation (9) und der Entnahmestation (11) evakuiert, begast, mit einer Oberfolie (4) verschlossen, versiegelt und/oder durch Schneiden der Oberfolie (4) vereinzelt werden.
